# EUROPÄISCHE PATENTSCHRIFT

(11) **EP 3 273 319 B1**
(45) Veröffentlichungstag und Bekanntmachung des Hinweises auf die Patenterteilung: **06.11.2019**
(21) Anmeldenummer: 17179870.5
(22) Anmeldetag: 05.07.2017
(51) Int. Cl.: G05D 23/13

(54) **THERMOSTATKARTUSCHE MIT IN DER SCHLIESSSTELLUNG FIXIERTER REGELHÜLSE**
THERMOSTATIC CARTRIDGE WITH CONTROL SLEEVE FIXED IN THE CLOSED POSITION
CARTOUCHE THERMOSTATIQUE COMPRENANT UN MANCHON DE RÉGLAGE FIXÉ DANS LA POSITION DE FERMETURE

(30) Priorität: 21.07.2016 DE 102016113511
(43) Veröffentlichungstag der Anmeldung: 24.01.2018
(73) Patentinhaber: Ideal Standard International NV, 1935 Zaventem (BE)
(72) Erfinder: Schmitz, Manuel, 54497 Horath (DE)
(74) Vertreter: Feucker, Max Martin

(56) Entgegenhaltungen:
- DE-A1- 19 502 147
- GB-A- 2 275 097

## Beschreibung

Die Erfindung betrifft eine Thermostatkartusche mit einem Kaltwassereinlass, einem Heißwassereinlass, einem Mischwasserauslass und einem zwischen Kaltwassereinlass sowie Heißwassereinlass einerseits und dem Mischwasserauslass andererseits ausgebildeten Mischwasserraum, sowie mit einer von einem im Mischwasserraum angeordneten Dehnstoffelement beaufschlagten, gehäuseseitig federabgestützten Regelhülse, die in der Schließstellung der Thermostatkartusche wenigstens den Heißwassereinlass absperrt und in Regelstellungen der Thermostatkartusche das Mischungsverhältnis von Kaltwasser und Heißwasser einstellt, und mit einer an das Dehnstoffelement angeschlossenen Überhubeinheit, bestehend aus einem verschiebbar angeordneten Hülsenkörper, einem in dem Hülsenkörper verschiebbar angeordneten und einen Anschlag für das daran angeschlossene Dehnstoffelement bildenden Druckstück und einem sich zwischen Hülsenkörper und Druckstück abstützenden Federelement, sowie ferner mit einer den Hülsenkörper der Überhubeinheit beaufschlagenden, mittels einer Temperatureinstellvorrichtung betätigbaren Antriebseinheit.

Eine Thermostatkartusche mit den vorgenannten Merkmalen ist in der DE 195 02 147 A1 beschrieben. Bei der bekannten Thermostatkartusche erfolgt die Temperatureinstellung mittels eines Drehgriffes als Temperatureinstellvorrichtung, dessen über eine Antriebseinheit bewirkte Drehung auf eine sogenannte Überhubeinheit übertragen wird. Diese Überhubeinheit besteht aus einem aufgrund der Drehung des Drehgriffes verschiebbar angeordneten Hülsenkörper und einem in den Hülsenkörper verschiebbar angeordneten Druckstück, welches unter der Wirkung eines sich zwischen einem Boden des Hülsenkörpers und dem Druckstück abstützenden Druckfederelements in Anlage an dem gegenüberliegenden Boden des Hülsenkörpers gedrückt ist. An das Druckstück ist mittels eines Druckstabes das eine Ende eines im Mischwasserraum der Thermostatkartusche angeordneten Dehnstoffelementes angeschlossen, wobei das andere, gegenüberliegende Ende des Dehnstoffelementes gegen einen gehäuseseitig federabgestützten Anschlag liegt, so dass das Dehnstoffelement zwischen dem Druckstück der Überhubeinheit und dem federgespannten gehäuseseitigen Anschlag eingespannt ist. An dem Dehnstoffelement ist eine jeweils Steuerkanten für den Kaltwassereinlass und den Heißwassereinlass aufweisende Regelhülse befestigt.

Somit erfolgt die Temperatureinstellung bei der bekannten Thermostatkartusche mittels einer Verschiebung des Hülsenkörpers in die der gewünschten Temperatur entsprechende Stellung, wonach aufgrund der Federvorspannung zwischen Hülsenkörper und Druckstück das an das Druckstück gekoppelte Dehnstoffelement in eine Stellung gebracht wird, in welcher die an der an dem Dehnstoffelement befestigten Regelhülse befindlichen Steuerkanten den Zufluss an Kaltwasser und Heißwasser in den Mischwasserraum in dem der eingestellten Temperatur entsprechenden Verhältnis einstellen. Diese Temperatur wird anschließend durch eine von dem federeingespannten Dehnstoffelement in einer bekannten Weise vorgenommenen Nachregelung aufrechterhalten.

Mit der bekannten Thermostatkartusche ist noch der Nachteil verbunden, dass in der den Heißwassereinlass absperrenden Schließstellung der Thermostatkartusche die auf die an dem Dehnstoffelement befestigte Regelhülse zur Absperrung des Heißwassereinlasses erforderlichen Schließkräfte vollständig über das Dehnstoffelement übertragen werden, womit eine entsprechende Beanspruchung des Dehnstoffelementes verbunden ist. Wirken bei dieser Anordnung beispielsweise Temperatureinflüsse auf die Thermostatkartusche und damit auf das Dehnstoffelement ein, so kann es zu einer Regelbewegung des Dehnstoffelementes kommen derart, dass die sichere Absperrung insbesondere des Heißwassereinlasses beeinträchtigt ist. Außerdem kann die ständige Kraftbeaufschlagung des Dehnstoffelementes dazu führen, dass der Dehnstoff, beispielsweise ein Wachs, über die Lebensdauer der Thermostatkartusche vorzeitig altert oder aus dem zugehörigen Gehäuse des Dehnstoffelementes ausdiffundiert, so dass die Funktion des Dehnstoffelementes vorzeitig beeinträchtigt ist.

Eine weitere Thermostatkartusche ist aus GB 2 275 097 A bekannt.

Der Erfindung liegt die Aufgabe zugrunde, bei einer Thermostatkartusche mit den eingangs genannten Merkmalen dafür Sorge zu tragen, dass unter allen Umständen in der vollständigen Schließstellung der Thermostatkartusche keine Absperrung des Kaltwassereinlasses notwendig ist.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass die Regelhülse von dem Dehnstoffelement entkoppelt und in ihrer der vollständigen Schließstellung der Thermostatkartusche entsprechenden Ausgangsstellung mit einem Abstand zum Dehnstoffelement in dessen Regelrichtung angeordnet ist und zwischen dem Druckstück und der Regelhülse ein Schließadapter angeordnet ist, der bis zum geregelten Öffnen des Heißwassereinlasses durch die Regelhülse das Dehnstoffelement überbrückt und die vom Druckstück ausgehende Schließkraft unmittelbar auf die Regelhülse überträgt und diese in die den Heißwassereinlass absperrende Stellung drückt, so dass das mit einem Ende in den Schließadapter eingelegte Dehnstoffelement nicht von auf die Regelhülse zu übertragenden Schließkräften belastet ist, und dass der Schließadapter fest mit dem Druckstück verbunden ist und dadurch dessen durch die Antriebseinheit vorgegebenen Bewegungen folgt, wobei der von der Antriebseinheit beaufschlagte Hülsenkörper der Überhubeinheit selbst als Absperrhülse für den Mischwasserauslass ausgebildet ist, der in der Schließstellung der Thermostatkartusche den Mischwasserauslass gegen den Mischwasserraum abschließt. Aufgrund der Loslösung der Regelhülse von dem Dehnstoffelement und der gleichzeitigen Zwischenschaltung des Schließadapters zwischen Druckstück und Regelhülse ist sichergestellt, dass die von der Überhubeinheit beziehungsweise dem federbeaufschlagten Druckstück ausgehenden Schließkräfte unmittelbar auf die Regelhülse übertragen werden und diese somit in der vollständigen Schließstellung der Thermostatkartusche zuverlässig in die Absperrstellung für den Heißwassereinlass drücken. Gleichzeitig ist in dieser vollständigen Schließstellung der Thermostatkartusche ein Abstand zwischen der Regelhülse und dem Dehnstoffelement vorgesehen, der ebenfalls dazu beiträgt, dass in der Schließstellung der Thermostatkartusche keinerlei Kräfte auf das Dehnstoffelement einwirken. Die Absperrstellung ist von äußeren Temperatureinwirkungen nicht beeinflussbar. Gleichzeitig ist das Dehnstoffelement in der Schließstellung der Thermostatkartusche vollständig unbelastet beziehungsweise frei von einwirkenden Kräften, wodurch zusätzlich die Lebensdauer der Thermostatkartusche insgesamt erhöht sein dürfte. Aufgrund der Absperrung des Mischwasserauslasses in der vollständigen Schließstellung der Thermostatkartusche bedarf es einer Absperrung des Kaltwassereinlasses eben nicht.

Nach einem Ausführungsbeispiel der Erfindung ist vorgesehen, dass der Kaltwassereinlass in der Schließstellung der Thermostatkartusche mit dem Mischwasserraum in Verbindung steht. Hiermit ist der Vorteil verbunden, dass die Thermostatkartusche in ihrer vollständigen Schließstellung jeweils mit kaltem Wasser beaufschlagt beziehungsweise gefüllt ist, was vorteilhaft auch für die Funktion der Thermostatkartusche ist. Es kommt hinzu, dass zu Beginn der Öffnungsbewegung der Thermostatkartusche jeweils immer zuerst kaltes Wasser ausströmt, so dass es nicht zu einer Gefährdung des Benutzers einer mit der Thermostatkartusche ausgerüsteten Sanitärarmatur etwa durch zunächst ausströmendes heißes Wasser kommen kann.

Um sicherzustellen, dass auch bei beginnender Öffnung der Thermostatkartusche der anfängliche Austritt nur von Kaltwasser aus dem Mischwasserauslass aufrechterhalten bleibt, ist vorgesehen, dass das Druckstück mit dem daran befestigten Schließadapter in der Schließstellung der Thermostatkartusche mit einem Spaltabstand zu dem Boden des von der Antriebseinheit beaufschlagten Hülsenkörpers der Überhubeinheit steht, so dass zu Beginn der Temperaturverstellung eine Relativverschiebung des Hülsenkörpers zum Druckstück bei Aufrechterhaltung der Schließstellung der Regelhülse erfolgt und erst nach Überwindung des Spaltabstandes durch anschließende Verschiebung des Hülsenkörpers einschließlich Druckstück und Schließadapter eine Freigabe der Regelhülse zu deren durch das Dehnstoffelement gesteuerten Regelbewegungen erfolgt. Aufgrund der vorgesehenen, zunächst erfolgenden Relativbewegung zwischen Hülsenkörper beziehungsweise Absperrhülse und dem die Regelhülse in ihrer Absperrstellung für den Heißwassereinlass haltenden Druckstück führt die anfängliche Verschiebung des Hülsenkörpers beziehungsweise der Absperrhülse zu einer teilweisen Öffnung des Mischwasserauslasses und damit zum Ausströmen von Kaltwasser, bis der Hülsenkörper beziehungsweise die Absperrhülse in Anlage mit dem Druckstück kommt. Erst eine durch die Temperaturwahl über die Antriebseinheit erfolgende weitere Verschiebung des Hülsenkörpers gemeinsam mit dem Druckstück und dem daran befestigten Schließadapter führt zu einer Freigabe der Regelhülse insoweit, dass die Regelhülse aufgrund ihrer Federbeaufschlagung nunmehr den Abstand zum zugeordneten Ende des Dehnstoffelements überwindet und somit unter der alleinigen Wirkung des Dehnstoffelementes den Heißwassereinlass in dem gewünschten Maß freigibt. Im Anschluss daran kann das zwischen Schließadapter und Regelhülse eingespannte Dehnstoffelement die Nachregelung der Stellung der Regelhülse zum Heißwassereinlass entsprechend der gewünschten, über die Stellung des Hülsenkörpers voreingestellten Temperatur steuern.

Nach einem Ausführungsbeispiel der Erfindung ist vorgesehen, dass der Schließadapter als eine das Dehnstoffelement umgebende Hülse mit darin ausgebildeten Durchströmöffnungen für das zu- und abströmende Wasser ausgebildet ist.

Hierbei kann vorgesehen sein, dass das mit einem Ende in den hülsenförmigen Schließadapter eingelegte Dehnstoffelement einen radial abstehenden Bund aufweist und sich mit einer an dem Bund ausgebildeten Schulter gegen den das zugeordnete Ende den Dehnstoffelementes umschließenden Bereich des Schließadapters abstützt.

Soweit es bei Anwendung von Sanitärarmaturen eine Anforderung darstellt, die Temperatureinstellung so zu wählen, dass eine thermische Desinfektion der Sanitärarmatur sowie der an diese angeschlossenen Wasserwege ausschließlich mit Heißwasser erfolgt, ist nach einem Ausführungsbeispiel der Erfindung vorgesehen, dass Heißwasserauslass, Kaltwassereinlass und Regelhülse derart zueinander angeordnet sind, dass in der maximalen Öffnungsstellung der Regelhülse für den Heißwassereinlass die Regelhülse gleichzeitig den Kaltwassereinlass verschließt. Da in der maximalen Temperatureinstellung die Regelhülse bei vollständig geöffnetem Heißwassereinlass gleichzeitig den Kaltwassereinlass absperrt, wird die Thermostatkartusche ausschließlich von Heißwasser durchströmt, so dass die gewünschte thermische Desinfektion durchgeführt wird.

In der Zeichnung ist ein Ausführungsbeispiel der Erfindung wiedergegeben, welches nachstehend beschrieben ist. Es zeigen:
- Fig. 1: eine Sanitärarmatur zur Aufnahme einer Thermostatkartusche gemäß Fig. 2 bis 5 in einer schematischen Darstellung,
- Fig. 2: eine Thermostatkartusche in der vollständigen Schließstellung in einer Schnittansicht,
- Fig. 3: die Thermostatkartusche gemäß Fig. 2 in einer ersten, nur einen Ausfluss von Kaltwasser ermöglichenden Öffnungsstellung,
- Fig. 4: die Thermostatkartusche gemäß Fig. 3 in einer zweiten, einen Ausfluss von Mischwasser ermöglichenden Öffnungsstellung,
- Fig. 5: die Thermostatkartusche gemäß Fig. 4 in einer maximalen, einen Ausfluss von ausschließlich Heißwasser ermöglichenden Öffnungsstellung.

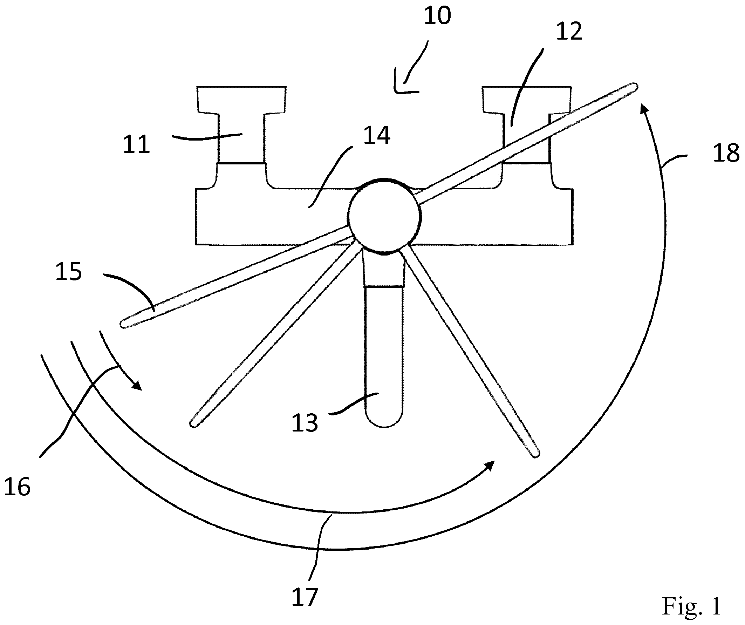

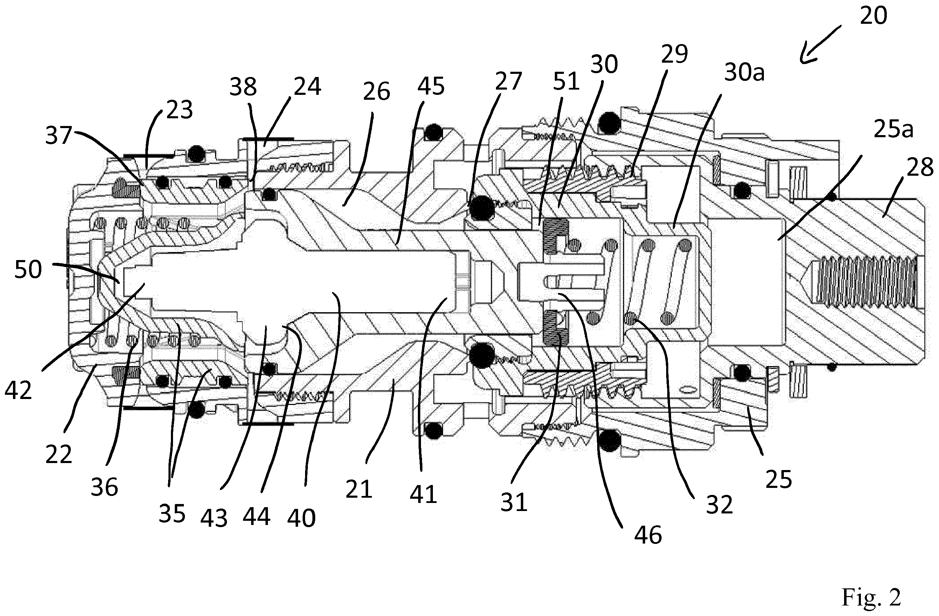

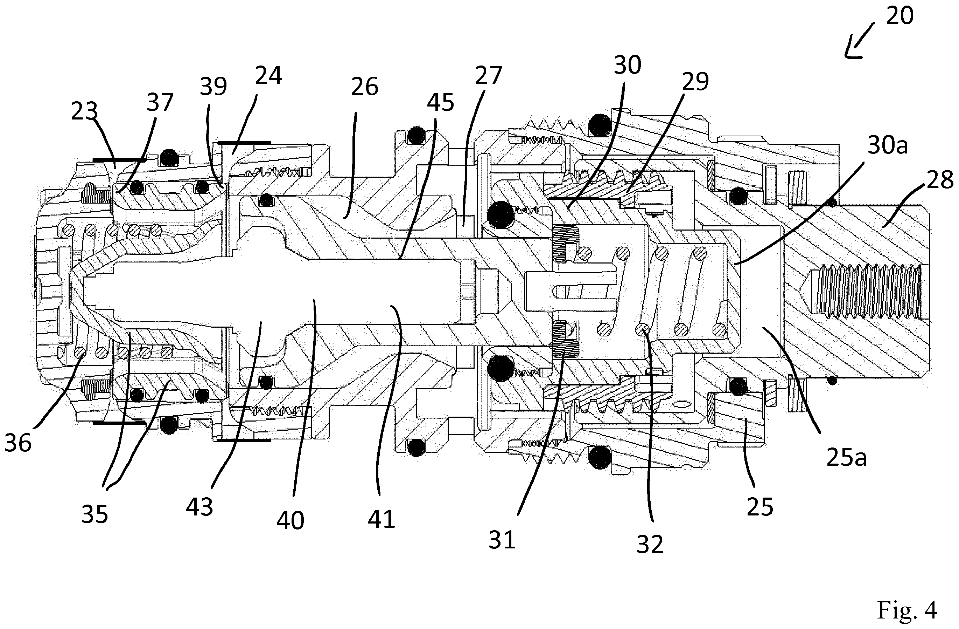

Die aus Fig. 1 ersichtliche Sanitärarmatur 10 weist einen Kaltwasserzulauf 11 und einen Heißwasserzulauf 12 sowie einen Wasserauslauf 13 auf. Zwischen den Zuläufen 11, 12 ist eine Aufnahme 14 für eine in den Fig. 2 bis 5 dargestellte Thermostatkartusche angeordnet. Die Sanitärarmatur 10 weist einen Bedienungshebel 15 als Temperatureinstellvorrichtung auf, wobei der mögliche Schwenkweg des Bedienungshebels 15 in unterschiedliche Funktionsbereiche unterteilt ist. So bezieht sich ein erster Schwenkbereich 16 mit einem Schwenkwinkel von beispielsweise bis zu 20 bis 25 Grad auf eine Kaltwasserzone, in welcher ausschließlich ein Ausfluss von Kaltwasser erfolgt. Ein daran anschließender zweiter Schwenkbereich 17 bis ungefähr 100 bis 110 Grad Schwenkweg des Bedienungshebels 15 bezieht sich auf eine sogenannte Mischwasserzone, in welcher ein Ausfluss von Mischwasser in dem gewünschten Temperaturbereich einstellbar ist. Schließlich ist eine Position 18 bei einem Schwenkwinkel von etwa 180 bis 190 Grad vorgesehen, in welcher ausschließlich ein Ausfluss von heißem Wasser im Rahmen einer thermischen Desinfektion der Armatur vorgesehen ist.

Die im Einzelnen nun aus den Fig. 1 bis 4 in verschiedenen Funktionsstellungen ersichtliche Thermostatkartusche 20 weist ein in ihrem Mittelbereich angeordnetes Kartuschengehäuse 21 auf, an das sich auf der linken Seite über eine entsprechend festlegende Schraubverbindung ein Gehäuse 22 für eine darin angeordnete Regeleinheit anschließt. In dem Gehäuse 22 der Regeleinheit sind nebeneinanderliegend ein Heißwassereinlass 23 sowie ein Kaltwassereinlass 24 angeordnet. Auf der gegenüberliegenden Seite des Kartuschengehäuses 21 ist an dieses ein Kopfstück 25 angeschlossen, welches in sich eine Überhubeinheit sowie eine Antriebseinheit für die Temperaturverstellung aufnimmt. Das Kopfstück 25 dient gleichzeitig zur Festlegung der Thermostatkartusche 20 in dem Aufnahmeraum 14 der Sanitärarmatur 10 (vgl. Fig. 1).

Die in dem Kopfstück 25 untergebrachte Antriebseinheit besteht aus einer Spindel 28, die mittels des Bedienungshebels 14 (Fig. 1) zur Temperatureinstellung verdreht werden kann, sowie aus einem Übertragungsteil 29. Die ebenfalls im Kopfstück 25 untergebrachte aus dem Stand der Technik an sich bekannte Überhubeinheit besteht aus einem von dem Übertragungsteil 29 der Antriebseinheit zu beaufschlagenden, verschiebbar angeordneten Hülsenkörper 30, wobei im Inneren des Hülsenkörpers 30 ein Druckstück 31 angeordnet ist. Das Druckstück 31 ist mittels einer sich am rechten Ende des Hülsenkörpers 30 abstützenden Druckfeder 32 nach links federvorgespannt.

In dem Kartuschengehäuse 21 ist ein Mischwasserraum 26 ausgebildet, der mit einem Mischwasserauslass 27 in Verbindung steht. Gleichzeitig steht der Mischwasserraum 26 ebenfalls mit Heißwassereinlass 23 sowie Kaltwassereinlass 24 in Verbindung.

In dem Gehäuse 22 für die Regeleinheit ist eine Regelhülse 35 verschiebbar angeordnet, die mittels einer sich am linksseitigen Gehäuseboden des Gehäuses 22 abstützenden Druckfeder 36 in Richtung des Kartuschengehäuses 21 vorgespannt ist. An der Regelhülse 35 ist eine Steuerkante 37 zum Zusammenwirken mit dem Heißwassereinlass 23 sowie eine Steuerkante 38 zum Zusammenwirken mit dem Kaltwassereinlass 24 ausgebildet.

Zwischen der dem Kartuschengehäuse 21 zugewandten Stirnseite der Regelhülse 35 und dem Druckstück 31 der Überhubeinheit ist ein hülsenförmiger und entsprechende Durchbrechungen aufweisender Schließadapter 45 angeordnet, der mit seinem linken Ende gegen die Stirnseite der Regelhülse 35 anliegt, und der mit seinem rechten Ende durch den zugeordneten Boden des Hülsenkörpers 30 hindurchreicht und mit dem im Inneren des Hülsenkörper 30 befindlichen Druckstück 31 fest verbunden, beispielsweise verrastet ist.

Im Inneren des Schließadapters 45 und damit auch innerhalb des Mischwasserraums 26 ist ein Dehnstoffelement 40 angeordnet, welches mit seinem rechten Ende in den Schließadapter 45 eingelegt ist. Etwa mittig weist das Dehnstoffelement 40 einen umlaufenden Bund 43 auf, der mit einer rechten Schulter 44 sich gegen den Schließadapter 45 abstützt, so dass insoweit das Dehnstoffelement einseitig in dem Schließadapter 45 festgelegt ist. Mit seinem gegenüberliegenden Ende 42 reicht das Dehnstoffelement 40 in das Innere der Regelhülse 35, wobei in der aus Fig. 2 ersichtlichen Ausgangsstellung, die der vollständigen Schließstellung der Thermostatkartusche 20 entspricht, zwischen der Regelhülse 35 und dem stirnseitigen Ende 42 des Dehnstoffelements 40 ein Abstand 50 ausgebildet ist.

Soweit in Fig. 2 die der vollständigen Schließstellung der Thermostatkartusche 20 entsprechende Funktionsstellung der Bauteile innerhalb der Thermostatkartusche 20 dargestellt ist, ist erkennbar, dass in dieser Stellung der Hülsenkörper 30 der Überhubeinheit gleichzeitig als Absperrhülse für den Mischwasserauslass 27 wirkt und diesen absperrt. Aufgrund seiner Beaufschlagung über die Druckfeder 32 drückt das im Inneren des Hülsenkörpers 30 verschiebbare Druckstück 31 den mit ihm verbundenen Schließadapter 45 nach links in Richtung der Regelhülse 35. Aufgrund der stirnseitigen Anlage des Schließadapters 45 an der Regelhülse 35 wird die Regelhülse 35 entgegen der Wirkung der Druckfeder 36 nach links in ihre Ausgangsstellung gedrückt, in welcher die Steuerkante 37 der Regelhülse 35 den Heißwassereinlass 23 verschließt. Gleichzeitig ist in dieser Stellung der Kaltwassereinlass 24 geöffnet, so dass im Inneren des Mischwasserraums 26 Kaltwasser ansteht, welches aber aufgrund der Absperrung des Mischwasserauslasses 27 durch den Hülsenkörper 30 nicht aus der Thermostatkartusche 20 ausfließen kann. Das im Inneren des Schließadapters 45 angeordnete Dehnstoffelement 40 ist von der Regelhülse 35 entkoppelt und nur an dem Schließadapter 45 gehalten. Dies wird durch den konstruktiv belassenen Abstand 50 zwischen Dehnstoffelement 40 und Regelhülse 35 erkennbar. Aus der vorstehenden Beschreibung folgt, dass in der dargestellten Ausgangsstellung das Dehnstoffelement 40 von dem Schließadapter 45 überbrückt wird, da die von dem federbelasteten Druckstück 31 ausgehenden Schließkräfte für die Regelhülse 35 ausschließlich über den Schließadapter 45 auf die Regelhülse 35 übertragen sind. Das Dehnstoffelement 40 ruht frei von jeglicher Kraftbeaufschlagung in dem Schließadapter 45.

Gleichzeitig ist als besondere Maßnahme noch ein Spaltabstand 51 zwischen dem Druckstück 31 und dem zugeordneten Boden des Hülsenkörpers 30 belassen, der zur Folge hat, dass zu Beginn einer Temperaturverstellung mit einer Verschiebung des Hülsenkörpers 30 nach rechts zunächst der Spaltabstand 51 überwunden wird, ohne dass es zu einer Verschiebung des Druckstücks 31 und damit einer Verschiebung des Schließadapters 45 kommt.

Die entsprechende Zwischenstellung beziehungsweise Öffnungsstellung der Thermostatkartusche 20 ist nun aus Fig. 2 ersichtlich. Hierbei ist durch eine Verschwenkung des Bedienungshebels 15 bis zum Ende des Kaltwasserschwenkbereichs 16 die Spindel 28 in Drehung versetzt, die über das zwischengeschaltete Übertragungsteil 29 den Hülsenkörper 30 um einen Teilbetrag nach rechts verschoben hat, bis der Hülsenkörper 30 bodenseitig unter Aufhebung des Spaltabstandes 51 in Anlage an dem Druckstückes 31 gekommen ist. Insoweit kann über die Bemessung des Spaltabstandes 51 der Kaltwasserschwenkbereich 16 des Bedienungshebels 14 festgelegt werden. Gleichzeitig hat der als Absperrhülse für den Mischwasserauslass 27 wirkende Hülsenkörper 30 den Mischwasserauslass 27 teilweise freigegeben, so dass aufgrund der offenen Verbindung zwischen Kaltwassereinlass 24 und Mischwasserraum 26 ausschließlich kaltes Wasser durch die Thermostatkartusche 20 strömen kann. Da sich trotz der Verschiebung des Hülsenkörpers 30 aufgrund der Abstützung durch die Druckfeder 32 das Druckstück 31 in einer unveränderten Lage befindet, wird auch weiterhin der Schließadapter 45 nach links gegen die Stirnseite der Regelhülse 35 gedrückt, so dass die Regelhülse 35 mit ihrer Steuerkante 37 weiterhin den Heißwassereinlass verschließt. Die anfängliche Verschiebung des Hülsenkörpers 30 nach rechts wird im Bereich des an dem Hülsenkörper 30 ausgebildeten Ansatzes 30a erkennbar, der sich etwas tiefer in eine im Kopfstück 25 ausgebildete Ausnehmung 25a eingeschoben hat.

Wird nun der Bedienungshebel 15 über den ersten Schwenkbereich 16 hinaus in den zweiten, die Mischwasserzone kennzeichnenden Schwenkbereich 17 verschwenkt, so erfolgt eine entsprechende Weiterdrehung der Spindel 28. Dies führt dazu, dass der Hülsenkörper 30 noch weiter nach rechts verschoben wird, was wiederum in dem tieferen Eingriff des Ansatzes 30a in der Ausnehmung 25a des Kopfstückes 25 sichtbar wird. In dieser Stellung wird der Mischwasserauslass 27 weiter geöffnet.

Gleichzeitig wird nunmehr wegen der bodenseitigen Anlage des Hülsenkörpers 30 an dem Druckstück 31 auch das Druckstück 31 mit nach rechts verschoben und nimmt aufgrund der festen Verbindung mit dem Schließadapter 45 diesen mit. Aufgrund der entsprechenden Verschiebung des Schließadapters 45 kommt nun dessen Stirnseite von der Regelhülse 35 frei, so dass die Regelhülse 35 unter der Wirkung der sie beaufschlagenden Druckfeder 36 in Anlage mit dem zugeordneten linken Ende 42 des Dehnstoffelementes 40 gebracht wird. Damit wird je nach der durch die Temperaturwahl vorgegebenen axialen Ausdehnung des Dehnstoffelementes der Heißwassereinlass 23 freigegeben, so dass in dem gewünschten Verhältnis Heißwasser in den Mischwasserraum 26 einströmen kann. Anschließend erfolgt die Aufrechterhaltung der voreingestellten Temperatur über die in an sich bekannter Weise durch die jeweilige axiale Ausdehnung des Dehnstoffelementes 40 gesteuerte Stellung der Regelhülse 35. Wird aufgrund einer Änderung der Temperatureinstellung der Hülsenkörper 30 in eine andere Lage verschoben, so wird dadurch auch eine andere axiale Ausdehnung des Dehnstoffelementes 40 ermöglicht.

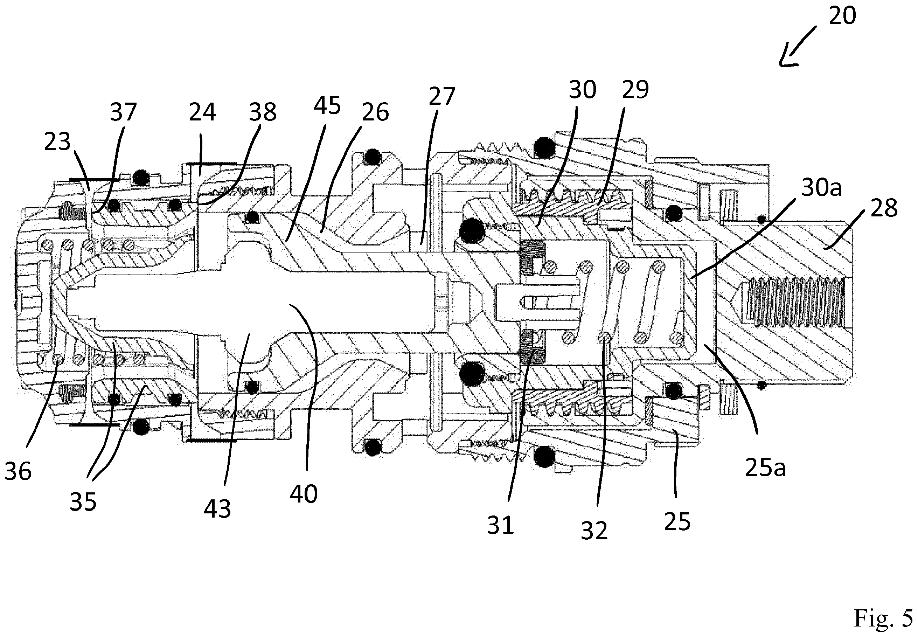

Ist eine thermische Desinfektion mit dem Heißwasser ohne die Zumischung von Kaltwasser beabsichtigt, so ist dafür die aus Fig. 5 ersichtliche maximale Öffnungsstellung der Thermostatkartusche 20 eingerichtet. Soweit die Spindel 28 hierzu entsprechend der Verschwenkung des Bedienungshebels 15 in die Heißwasserposition 18 weitergedreht wird, wird auch der Hülsenkörper 30 vollständig nach rechts verschoben, was wiederum durch den tief in die Ausnehmung 25a eingetauchten Absatz 30a des Hülsenkörpers 30 verdeutlicht ist. In dieser Stellung von Hülsenkörper 30 und davon mitgenommenen Druckstück 31 ist eine entsprechend größere axiale Ausdehnung des Dehnstoffelementes 40 für die Regelung der Regelhülse 35 gegeben. Es ist erkennbar, dass die Regelhülse 35 ihren maximalen Regelweg durchschritten hat, so dass die Steuerkante 37 den Heißwassereinlass 23 vollständig frei gegeben hat. Gleichzeitig hat in dieser Stellung die Steuerkante 38 den Kaltwassereinlass 24 verschlossen, so dass die Thermostatkartusche 20 ausschließlich von Heißwasser durchströmt ist.

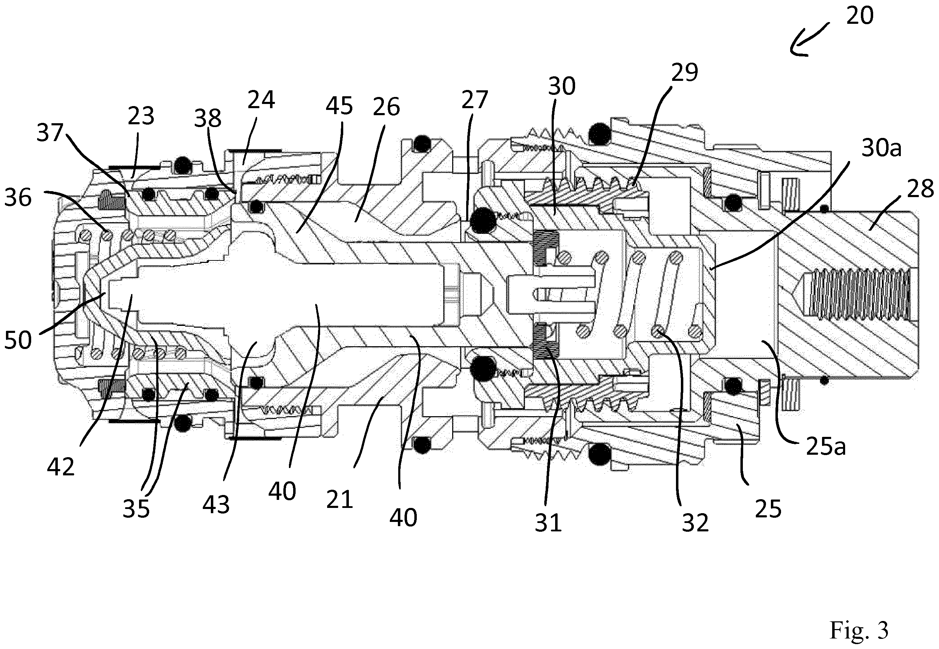

Der Sperrvorgang mit einem Schließen der Sanitärarmatur 10 vollzieht sich dabei durch die Rückschwenkung des Bedienungshebels 15 in gleicher Weise, nun nacheinander über die in den Fig. 5 - 4 - 3 - 2 dargestellten Funktionsstellungen der Thermostatkartusche, wobei einsichtig ist, das bei Erreichen der aus Fig. 3 ersichtlichen Zwischenstellung wiederum der Heißwassereinlass 23 bereits vollständig von der Regelhülse 35 abgesperrt ist, so dass ab diesem Zeitpunkt in der Thermostatkartusche 20 nur noch Kaltwasser ansteht, wie dies auch dem Ausgangszustand gemäß Fig. 1 entspricht.

## Patentansprüche

1. Thermostatkartusche (20) mit einem Kaltwassereinlass (24), einem Heißwassereinlass (23), einem Mischwasserauslass (27) und einem zwischen Kaltwassereinlass (24) sowie Heißwassereinlass (23) einerseits und dem Mischwasserauslass (27) andererseits ausgebildeten Mischwasserraum (26), sowie mit einer von einem im Mischwasserraum (26) angeordneten Dehnstoffelement (40) beaufschlagten, gehäuseseitig federabgestützten Regelhülse (35), die in der Schließstellung der Thermostatkartusche (20) wenigstens den Heißwassereinlass (23) absperrt und in Regelstellungen der Thermostatkartusche (20) das Mischungsverhältnis von Kaltwasser und Heißwasser einstellt, und mit einer an das Dehnstoffelement (40) angeschlossenen Überhubeinheit, bestehend aus einem verschiebbar angeordneten Hülsenkörper (30), einem in dem Hülsenkörper (30) verschiebbar angeordneten und einen Anschlag für das daran angeschlossene Dehnstoffelement (40) bildenden Druckstück (31) und einem sich zwischen Hülsenkörper (30) und Druckstück (31) abstützenden Federelement (32), sowie ferner mit einer den Hülsenkörper (30) der Überhubeinheit beaufschlagenden, mittels einer Temperatureinstellvorrichtung betätigbaren Antriebseinheit (28, 29),
**dadurch gekennzeichnet, dass**
die Regelhülse (35) von dem Dehnstoffelement (40) entkoppelt und in ihrer der vollständigen Schließstellung der Thermostatkartusche (20) entsprechenden Ausgangsstellung mit einem Abstand (50) zum Dehnstoffelement (40) in dessen Regelrichtung angeordnet ist und dass zwischen dem Druckstück (31) und der Regelhülse (35) ein Schließadapter (45) angeordnet ist, der bis zum geregelten Öffnen des Heißwassereinlasses (23) durch die Regelhülse (35) das Dehnstoffelement (40) überbrückt und die vom Druckstück (31) ausgehende Schließkraft unmittelbar auf die Regelhülse (35) überträgt und diese in die den Heißwassereinlass (23) absperrende Stellung drückt, so dass das mit einem Ende (41) in den Schließadapter (45) eingelegte Dehnstoffelement (40) nicht von auf die Regelhülse (35) zu übertragenden Schließkräften belastet ist, und dass der Schließadapter (45) fest mit dem Druckstück (31) verbunden ist und dadurch dessen durch die Antriebseinheit vorgegebenen Bewegungen folgt, wobei der von der Antriebseinheit beaufschlagte Hülsenkörper (30) der Überhubeinheit selbst als Absperrhülse für den Mischwasserauslass (27) ausgebildet ist, der in der Schließstellung der Thermostatkartusche (20) den Mischwasserauslass (27) gegen den Mischwasserraum (26) abschließt.

2. Thermostatkartusche nach Anspruch 1, wobei der Kaltwassereinlass (24) in der Schließstellung der Thermostatkartusche (20) mit dem Mischwasserraum (26) in Verbindung steht.

3. Thermostatkartusche nach einem der Ansprüche 1 bis 2, bei welcher das Druckstück (31) mit dem daran befestigten Schließadapter (45) in der Schließstellung der Thermostatkartusche (20) mit einem Spaltabstand (51) zu dem Boden des von der Antriebseinheit beaufschlagten Hülsenkörpers (30) der Überhubeinheit steht, so dass zu Beginn der Temperaturverstellung eine Relativverschiebung des Hülsenkörpers (30) zum Druckstück (31) bei Aufrechterhaltung der Schließstellung der Regelhülse (35) erfolgt und erst nach Überwindung des Spaltabstandes (51) durch anschließende Verschiebung des Hülsenkörpers (30) einschließlich Druckstück (31) und Schließadapter (45) eine Freigabe der Regelhülse (35) zu deren durch das Dehnstoffelement (40) gesteuerten Regelbewegungen erfolgt.

4. Thermostatkartusche nach einem der Ansprüche 1 bis 3, wobei der Schließadapter (45) als eine das Dehnstoffelement (40) umgebende Hülse mit darin ausgebildeten Durchströmöffnungen für das zu- und abströmende Wasser ausgebildet ist.

5. Thermostatkartusche nach Anspruch 4, wobei das mit einem Ende (41) in den hülsenförmigen Schließadapter (45) eingelegte Dehnstoffelement (40) einen radial abstehenden Bund (43) aufweist und sich mit einer an dem Bund (43) ausgebildeten Schulter (44) gegen den das zugeordnete Ende des Dehnstoffelementes (40) umschließenden Bereich des Schließadapters (45) abstützt.

6. Thermostatkartusche nach einem der Ansprüche 1 bis 5, bei welcher Heißwasserauslass (23), Kaltwassereinlass (24) und Regelhülse (35) derart zueinander angeordnet sind, dass in der maximalen Öffnungsstellung der Regelhülse (35) für den Heißwassereinlass (23) die Regelhülse (35) gleichzeitig den Kaltwassereinlass (24) verschließt.

## Claims

1. Thermostat cartridge (20) with a cold water inlet (24), a hot water inlet (23), a mixed water outlet (27) and a mixed water space (26) formed between the cold water inlet (24) and hot water inlet (23) on one side and the mixed water outlet (27) on the other side, as well as with a spring-supported control sleeve (35) on the housing side on which an expansion material element (40) arranged in the mixed water space (26) acts, which control sleeve (35) in the closed position of the thermostat cartridge (20) shuts off at least the hot water inlet (23) and in a regulating position of the thermostat cartridge (20) adjusts the mixing ratio of cold water and hot water, and with, connected to the expansion material element (40), an overtravel unit, comprising a displaceably arranged sleeve body (30), a pressure part (31) arranged displaceably in the sleeve body (30) and forming a stop for the expansion material element (40) connected thereto, and a spring element (32) supported between the sleeve body (30) and pressures part (31) as well as with an actuator unit (28, 29) which acts on the sleeve body (30) of the overtravel unit and is operable by way of a temperature setting device,
**characterised in that**
the control sleeve (35) is uncoupled from the expansion material element (40) and is arranged in an initial position corresponding to the full closed position of the thermostat cartridge (20) with a distance (50) to the expansion material element (40) in its regulating direction and **in that** arranged between the pressure part (31) and the control sleeve (35) is a closing adaptor (45) which until the regulated opening of the hot water inlet (23) by the control sleeve (35) bridges the expansion material element (40) and directly transmits the closing force originating from the pressure part (31) to the control sleeve (35) and presses this into the positon shutting off the hot water inlet (23), so that the expansion material part (40) inserted with one end (41) into the closing adapter (45) is not subjected to the exertion of closing forces to be transmitted to the control sleeve (35), and **in that** the closing adapter (45) is firmly connected with the pressure part (31) and thereby follows movements predetermined by the actuator unit, wherein the sleeve body (30) of the overtravel unit on which the actuator unit acts is itself designed as a shut-off sleeve for the mixed water outlet (27) which in the closed position of the thermostat cartridge (20) shuts off the mixed water outlet (27) from the mixed water space (26).

2. Thermostat cartridge according to claim 1 wherein in the closed position of the thermostat cartridge (20) the cold water inlet (24) is in connection with the mixed water space (26).

3. Thermostat cartridge according to any one of claims 1 to 2 in which in the closed position of the thermostat cartridge (20) the pressure part (31) with the closing adapter (45) connected thereto is at a gap distance (51) from the base of the sleeve body (30) of the overtravel unit on which the actuator unit acts so that at the start of the temperature adjustment a relative displacement of the sleeve body (30) to the pressure part (31) takes place, while maintaining the closed position of the control sleeve (35) and only after overcoming the gap distance (51) through subsequent displacement of the sleeve body (30) including pressure part (31) and closing adapter (45) is the control sleeve (35) cleared to carry out its regulating movements controlled by the expansion material element (40).

4. Thermostat cartridge according to any one of claims 1 to 3 wherein the closing adapter (45) is designed as a sleeve surrounding the expansion material (40) with throughflow openings formed therein for the water flowing in and out.

5. Thermostat cartridge according to claim 4 wherein the expansion material element (40) with one end (41) inserted into the sleeve-like closing adapter (45) comprises a radially protruding collar (43), and with a shoulder (44) formed on the collar (43) is supported against the area of the closing adapter (45) surrounding the assigned end of the expansion material element (40).

6. Thermostat cartridge according to any one of claims 1 to 5 in which the hot water outlet (23), cold water inlet (24) and control sleeve (35) are arranged in relation to each other in such a way that in the maximum opening position of the control sleeve (35) for the hot water inlet (23) the control sleeve (35) simultaneously closes the cold water inlet (24).

## Revendications

1. Cartouche thermostatique (20) dotée d'une entrée d'eau froide (24), d'une entrée d'eau chaude (23), d'une sortie d'eau mélangée (27) et d'un espace d'eau mélangée (26) conçu entre l'entrée d'eau froide (24) et l'entrée d'eau chaude (23) d'une part et la sortie d'eau mélangée (27) d'autre part, et dotée d'une douille de réglage (35) appuyée sur ressort côté boîtier, sollicitée par un élément en matière expansible (40) placé dans l'espace d'eau mélangée (26), qui dans la position fermée de la cartouche thermostatique (20) ferme au moins l'entrée d'eau chaude (23) et dans des positions de réglage de la cartouche thermostatique (20), règle la proportion de mélange de l'eau froide et de l'eau chaude, et dotée d'une unité de surélévation raccordée sur l'élément en matière expansible (40), consistant dans un corps de douille (30) placé en étant déplaçable, d'une pièce de pression (31) placée en étant déplaçable dans le corps de douille (30) et formant une butée pour l'élément en matière expansible (40) qui s'y raccorde et d'un élément à ressort (32) s'appuyant entre le corps de douille (30) et la pièce de pression (31), et dotée par ailleurs d'une unité d'entraînement (28, 29) sollicitant le corps de douille (30) de l'unité de surélévation, susceptible d'être actionnée au moyen d'un dispositif de réglage de la température, **caractérisée en ce que** la douille de réglage (35) est placée en étant désaccouplée de l'élément en matière expansible (40) et dans sa position initiale correspondant à la position totalement fermée de la cartouche thermostatique (20), avec un écart (50) par rapport à l'élément en matière expansible (40) dans la direction de réglage de celui-ci et **en ce qu'**entre la pièce de pression (31) et la douille de réglage (35) est placé un adaptateur de fermeture (45),
qui jusqu'à l'ouverture régulée de l'entrée d'eau chaude (23) par la douille de réglage (35) chevauche l'élément en matière expansible (40) et transfère directement sur la douille de réglage (35) la force de fermeture émanant de la pièce de pression (31) et pousse celle-ci dans la position d'obstruction de l'entrée d'eau chaude (23), de sorte que l'élément en matière expansible (40), inséré par une extrémité (41) dans l'adaptateur de fermeture (45) ne soit pas contraint par des forces de fermeture destinées à être transférées sur la douille de réglage (35) et **en ce que** l'adaptateur de fermeture (45) est fixement relié avec la pièce de pression (31) et suit de ce fait les déplacements de celle-ci, prédéfinis par l'unité d'entraînement, le corps de douille (30) de l'unité de surélévation sollicité par l'unité d'entraînement étant lui-même conçu en tant que douille d'obstruction pour la sortie d'eau mélangée (27), qui dans la position de fermeture de la cartouche thermostatique (20) ferme la sortie d'eau mélangée (27) par rapport à l'espace d'eau mélangée (26).

2. Cartouche thermostatique selon la revendication 1, dans la position de fermeture de la cartouche thermostatique (20), l'entrée d'eau froide (24) étant en liaison avec l'espace d'eau mélangée (26).

3. Cartouche thermostatique selon l'une quelconque des revendications 1 ou 2, sur laquelle, dans la position de fermeture de la cartouche thermostatique (20), la pièce de pression (31) avec l'adaptateur de fermeture (45) qui y est fixé se situe avec un écart de fente (51) par rapport au fond du corps de douille (30) de l'unité de surélévation sollicité par l'unité d'entraînement, de sorte qu'au début de l'ajustement de la température ait lieu un déplacement relatif du corps de douille (30) par rapport à la pièce de pression (31), sous maintien de la position de fermeture de la douille de réglage (35) et que seulement après le franchissement de l'écart de fente (51) par déplacement consécutif du corps de douille (30) incluant la pièce de pression (31) et de l'adaptateur de fermeture (45), il s'effectue une libération de la douille de réglage (35) pour ses déplacements en réglage commandés par l'élément en matière expansible (40).

4. Cartouche thermostatique selon l'une quelconque des revendications 1 à 3, l'adaptateur de fermeture (45) étant conçu sous la forme d'une douille entourant l'élément en matière expansible (40), dotée d'orifices de passage conçus en son intérieur pour l'eau qui afflue et qui s'écoule.

5. Cartouche thermostatique selon la revendication 4, l'élément en matière expansible (40) inséré par une extrémité (41) dans l'adaptateur de fermeture (45) en forme de douille comportant un collet (43) débordant en direction radiale et par un épaulement (44) conçu sur le collet (43), s'appuyant contre la zone entourant l'extrémité associée de l'élément en matière expansible (40) de l'adaptateur de fermeture (45).

6. Cartouche thermostatique selon l'une quelconque des revendications 1 à 5, sur lequel la sortie d'eau chaude (23), l'entrée d'eau froide (24) et la douille de réglage (35) sont placées l'une par rapport à l'autre de telle sorte que dans la position d'ouverture maximale de la douille de réglage (35) pour l'entrée d'eau chaude (23), la douille de réglage (35) ferme simultanément l'entrée d'eau froide (24).
